(19)

Europäisches
Patentamt
European
Patent Office
Office européen
des brevets

(11) **EP 4 564 760 A1**

(12) **EUROPEAN PATENT APPLICATION**
published in accordance with Art. 153(4) EPC

(43) Date of publication:
**04.06.2025   Bulletin 2025/23**

(21) Application number: **22958370.3**

(22) Date of filing: **14.09.2022**

(51) International Patent Classification (IPC):
***H04L 27/00*** *(2006.01)*

(52) Cooperative Patent Classification (CPC):
**H04L 27/00**

(86) International application number:
**PCT/CN2022/118589**

(87) International publication number:
**WO 2024/055176 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **HE, Jia
  Shenzhen, Guangdong 518129 (CN)**
• **DU, Xianfeng
  Shenzhen, Guangdong 518129 (CN)**
• **HUANG, Huang
  Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS, AND DEVICE AND STORAGE MEDIUM**

(57)    This application provides a communication method and apparatus, a device, and a storage medium. The method includes: A first apparatus determines a first signal, where the first signal includes a communication signal and a sensing signal, and the communication signal and the sensing signal occupy a same time-frequency resource; and the first apparatus sends the first signal to a second apparatus. In this way, the sensing signal does not occupy a communication resource between the first apparatus and the second apparatus, mitigating impact of the sensing signal on a communication capacity.

200

First apparatus

Second apparatus

S210: Determine a first signal, where the first signal includes a communication signal and a sensing signal, and the communication signal and the sensing signal occupy a same time-frequency resource

S220: Send the first signal

S230: Determine the communication signal and the sensing signal in the first signal

FIG. 5

**Description**

**TECHNICAL FIELD**

This application relates to the field of communication technologies, and in particular, to a communication method and apparatus, a device, and a storage medium.

**BACKGROUND**

As communication technologies evolve, for example, a $5^{th}$ generation ($5^{th}$ generation, 5G) mobile communication system evolves to a next generation in terms of technologies and services, service elements are extended to intelligent agent elements, physical space elements, and virtual space elements, and information processing function requirements are extended from information transfer to information collection and information calculation. Emerging services pose higher requirements on end-to-end information processing capabilities of mobile communication networks, making integration of communication and sensing become one of leading trends of technologies and services in the communication field.

In a scenario of integration of communication and sensing, a pilot signal for sensing may be inserted into a communication signal to implement communication and sensing. However, because the pilot signal occupies a communication resource, a communication capacity is inevitably reduced.

**SUMMARY**

Embodiments of this application provide a communication method and apparatus, a device, and a storage medium, to reduce a communication resource occupied by a pilot signal for sensing in an integrated communication and sensing scenario, to improve a communication capacity.

According to a first aspect, an embodiment of this application provides a communication method, including: A first apparatus determines a first signal, where the first signal includes a communication signal and a sensing signal, and the communication signal and the sensing signal occupy a same time-frequency resource; and the first apparatus sends the first signal to a second apparatus.

According to the communication method provided in the first aspect, in the first signal determined by the first apparatus, the sensing signal and the communication signal occupy the same time-frequency resource. In other words, a dual-waveform first signal is obtained by superimposing the communication signal and the sensing signal. The first apparatus sends the first signal to the second apparatus to implement communication and sensing. In this way, the sensing signal does not occupy a time-frequency resource, thereby mitigating impact of the sensing signal on a communication capacity.

In a possible implementation, a first peak value is greater than a second peak value, the first peak value is a frequency domain peak value obtained after time-domain correlation is performed based on the sensing signal and a delayed signal of the sensing signal, and the second peak value is a frequency domain peak value obtained after time-domain correlation is performed based on the communication signal and a delayed signal of the communication signal.

According to the communication method provided in this implementation, when the first peak value is greater than the second peak value, in a process in which the second apparatus performs frequency domain processing to implement sensing, the communication signal does not cause interference to a frequency domain signal. In addition, the second apparatus is not correlated with the frequency domain peak value of the communication signal when receiving the signal. Therefore, the sensing signal does not interfere with receiving of the communication signal due to the first peak value being greater than the second peak value.

In a possible implementation, that the first apparatus sends the first signal to a second apparatus includes: The first apparatus sends the first signal by using N target antenna ports, where the N target antenna ports are included in an intersection set between W first antenna ports and M second antenna ports, the W first antenna ports are configured to send the sensing signal, the M second antenna ports are configured to send the communication signal, both W and M are greater than or equal to N, and N is greater than or equal to 1.

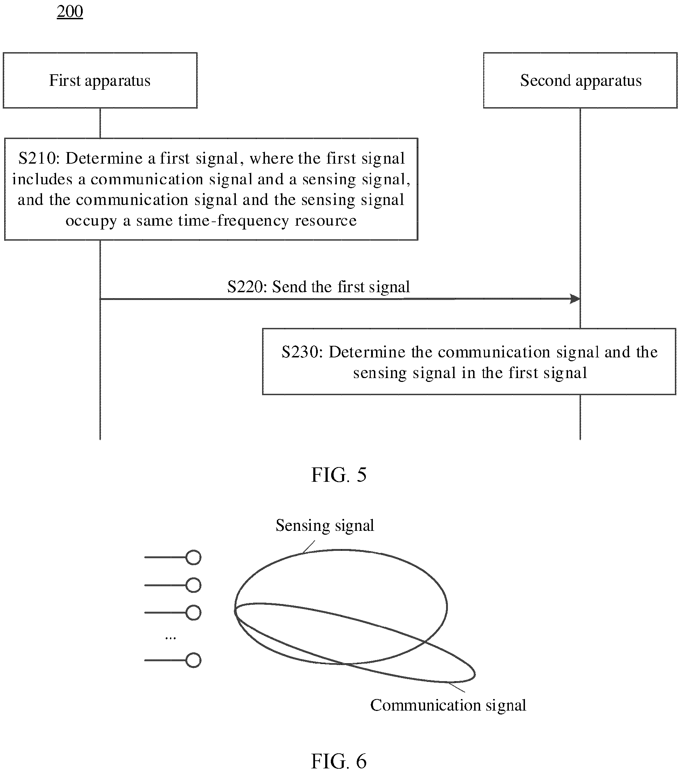

According to the communication method provided in this implementation, different antenna ports are configured for communication, sensing, and integrated communication and sensing, to implement flexible configuration based on different device requirements in a multiple-in multiple-out (multiple-in multiple-out, MIMO) scenario. For example, a communication signal is sent by using some antenna ports, a sensing signal is sent by using some antenna ports, and a superposed first signal is sent by using some antenna ports. Refer to FIG. 6. The sensing signal and the communication signal may be sent by using different antenna ports, there is an intersection set between the antenna port for sending the sensing signal and the antenna port for sending the communication signal, and the first signal is sent on an antenna port in the intersection set.

In a possible implementation, an $i^{th}$ target antenna port is an $i^{th}$ second antenna port of N second antenna ports, the N second antenna ports are second antenna ports that are of the M second antenna ports and that fall into the intersection set between the W first antenna ports and the M second antenna ports, and i is less than or equal to N and is greater than or equal to 1. The $i^{th}$ second antenna port and an $i^{th}$ first antenna port or an $(N-i+1)^{th}$ first antenna port of N first antenna ports are a same antenna port, and the N first antenna ports are first antenna ports that are of the W first antenna ports and that fall into the intersection set between the W first antenna ports and the M second antenna ports. Alternatively, the $i^{th}$ second antenna port belongs to a $j^{th}$ second antenna port group, the $j^{th}$ second antenna port group is an antenna port group obtained by dividing the N second antenna ports, the $j^{th}$ second antenna port group is a $j^{th}$ first antenna port or an $(M'-j+1)^{th}$ first antenna port of M' first antenna ports, the M' first antenna ports are first antenna ports that are of the W first antenna ports and that fall into the intersection set between the W first antenna ports and the M second antenna ports, j is less than or equal to M' and is greater than or equal to 1, and M' is less than or equal to N and is greater than or equal to 1.

According to the communication method provided in this implementation, flexible configuration of the antenna port of the first signal is implemented.

In a possible implementation, in M' second antenna port groups obtained by dividing the N second antenna ports, a $j^{th}$ second antenna port group includes an $(f0))^{th}$ second antenna port to an $(f(j+1)-1)^{th}$ second antenna port, where $f(j)$ is equal to:

$$ min\left(\left\lceil \frac{N}{M'} \right\rceil * \left(j-1\right)+1, N\right) \ \ or \ \ min\left(\left\lfloor \frac{N}{M'} \right\rfloor * \left(j-1\right)+1, N\right). $$

According to the communication method provided in this implementation, a possible implementation is provided for a case in which one first antenna port corresponds to a plurality of second antenna ports, thereby improving flexible configuration of the antenna port of the first signal.

In a possible implementation, both a power proportion of the communication signal in the first signal and a power proportion of the sensing signal in the first signal are correlated with a modulation ratio $\alpha$ on the time-frequency resource.

According to the communication method provided in this implementation, power of the communication signal and power of the sensing signal in the first signal are flexibly scheduled.

In a possible implementation, a time-domain waveform s of the first signal satisfies one of the following:

$$ s = \sqrt{\alpha}s_1 + \sqrt{1-\alpha}s_2 ; $$

and

$s = a_1 s_1 + a_2 s_2$, where $\alpha = \dfrac{a_1^2}{a_1^2 + a_2^2}$ , $a_1$ is the power proportion of the communication signal in the first signal, and $a_2$ is the power proportion of the sensing signal in the first signal; and

$s_1$ is a time-domain waveform of the communication signal, and $s_2$ is a time-domain waveform of the sensing signal.

According to the communication method provided in this implementation, when the time-domain waveform of the first signal satisfies the first formula, a sum of the power of the communication signal and the power of the sensing signal is stable, so that a radio frequency component including a radio frequency amplifier can work in a stable state. When the time-domain waveform of the first signal satisfies the second formula, a sum of the power of the communication signal and the power of the sensing signal is not limited to being continuously stable. In this case, power allocation may be performed for the communication signal and the sensing signal in a more flexible manner. In addition, the first signal in the foregoing example tends to set the power of the communication signal high, to ensure communication reliability.

In a possible implementation, the method further includes: The first apparatus receives first indication information sent by a third apparatus, where the first indication information indicates the modulation ratio $\alpha$; the first apparatus sends second indication information to the second apparatus, where the second indication information indicates the modulation ratio $\alpha$; or the first apparatus receives third indication information sent by the second apparatus, where the third indication information indicates the modulation ratio $\alpha$.

Optionally, the first indication information is carried in downlink control information DCI.

According to the communication method provided in this implementation, the third apparatus sends the first indication information to the first apparatus, to implement flexible configuration of the modulation ratio $\alpha$.

Optionally, the second indication information is carried in DCI or sidelink control information SCI.

Optionally, the third indication information is carried in DCI or SCI.

According to the communication method provided in this implementation, flexible configuration of the modulation ratio $\alpha$ is implemented through downlink or sidelink transmission between the first apparatus and the second apparatus.

In a possible implementation, at least one of the first indication information, the second indication information, or the third indication information includes an MCS index, and the MCS index corresponds to the modulation ratio $\alpha$.

According to the communication method provided in this implementation, the modulation ratio $\alpha$ does not need to be indicated by using additional signaling or an additional field, thereby reducing signaling overheads.

In a possible implementation, the method further includes: The first apparatus receives capability information sent by the second apparatus, where the capability information indicates a sensing interference cancellation capability of the second apparatus, and the sensing interference cancellation capability is used to determine the modulation ratio $\alpha$.

According to the communication method provided in this implementation, the first apparatus determines a matched modulation ratio $\alpha$ for the sensing interference cancellation capability of the second apparatus, to improve a signal processing capability of the second apparatus for the first signal, and prevent the sensing signal in the first signal from causing strong interference to the communication signal.

In a possible implementation, when the second apparatus has a sensing interference cancellation capability, the first apparatus sends the second indication information to the second apparatus.

According to the communication method provided in this implementation, it is avoided that the second indication information is sent to the second apparatus when the second apparatus cannot cancel the sensing signal in the first signal, thereby reducing signaling overheads.

In a possible implementation, the modulation ratio $\alpha$ is correlated with at least one of a signal-to-noise ratio, a code rate, a modulation scheme, and a code length of the second apparatus.

According to the communication method provided in this implementation, a matching degree between the modulation ratio $\alpha$ and the second apparatus is improved. This helps the second apparatus determine the communication signal and the sensing signal in the first signal.

In a possible implementation, the time-frequency resource includes L resource elements, a modulation ratio on a $k^{th}$ resource element of the L resource elements is $\alpha_k$, a modulation ratio on an $h^{th}$ resource element of the L resource elements is $\alpha_h$, $\alpha_k$ is different from $\alpha_h$, both k and h are less than or equal to L, and both k and h are greater than or equal to 1.

According to the communication method provided in this implementation, a modulation ratio of each resource element in the time-frequency resource may be scheduled to be $\alpha_k$, so that a scheduling granularity of the modulation ratio is reduced, and accuracy of determining the communication signal and the sensing signal in the first signal by the second apparatus is improved.

According to a second aspect, an embodiment of this application provides a communication method, including: A second apparatus receives a first signal from a first apparatus, where the first signal includes a communication signal and a sensing signal, and the communication signal and the sensing signal occupy a same time-frequency resource; and the second apparatus determines the communication signal and the sensing signal.

In a possible implementation, that the second apparatus determines the communication signal and the sensing signal includes:

The second apparatus performs sensing cancellation on the first signal based on a modulation ratio $\alpha$ on the time-frequency resource, to obtain the communication signal.

In a possible implementation, a first peak value is greater than a second peak value, the first peak value is a frequency domain peak value obtained after time-domain correlation is performed based on the sensing signal and a delayed signal of the sensing signal, and the second peak value is a frequency domain peak value obtained after time-domain correlation is performed based on the communication signal and a delayed signal of the communication signal.

In a possible implementation, both a power proportion of the communication signal in the first signal and a power proportion of the sensing signal in the first signal are correlated with the modulation ratio $\alpha$ on the time-frequency resource.

In a possible implementation, a time-domain waveform s of the first signal satisfies one of the following:

$$s = \sqrt{\alpha}\,s_1 + \sqrt{1-\alpha}\,s_2\,;$$

and

$s = a_1 s_1 + a_2 s_2$, where $\alpha = \dfrac{a_1^2}{a_1^2 + a_2^2}$ , $a_1$ is the power proportion of the communication signal in the first signal, and $a_2$ is the power proportion of the sensing signal in the first signal; and
$s_1$ is a time-domain waveform of the communication signal, and $s_2$ is a time-domain waveform of the sensing signal.

In a possible implementation, the method further includes: The second apparatus receives first indication information sent by a third apparatus, where the first indication information indicates the modulation ratio $\alpha$; the second apparatus receives second indication information sent by the first apparatus, where the second indication information indicates the modulation ratio $\alpha$; or the second apparatus sends third indication information to the first apparatus, where the third indication information indicates the modulation ratio $\alpha$.

In a possible implementation, the first indication information is carried in downlink control information DCI.

In a possible implementation, the second indication information is carried in DCI or sidelink control information SCI.

In a possible implementation, the third indication information is carried in DCI or SCI.

In a possible implementation, at least one of the first indication information, the second indication information, or the third indication information includes an MCS index, and the MCS index corresponds to the modulation ratio $\alpha$.

In a possible implementation, the method further includes: The second apparatus sends capability information to the first apparatus, where the capability information indicates a sensing interference cancellation capability of the second apparatus, and the sensing interference cancellation capability is used to determine the modulation ratio $\alpha$.

In a possible implementation, when the second apparatus has a sensing interference cancellation capability, the second apparatus receives the second indication information sent by the first apparatus.

In a possible implementation, the modulation ratio $\alpha$ is correlated with at least one of a signal-to-noise ratio, a code rate, a modulation scheme, and a code length of the second apparatus.

In a possible implementation, the time-frequency resource includes L resource elements, a modulation ratio on a $k^{th}$ resource element of the L resource elements is $\alpha_k$, a modulation ratio on an $h^{th}$ resource element of the L resource elements is $\alpha_h$, $\alpha_k$ is different from $\alpha_h$, both k and h are less than or equal to L, and both k and h are greater than or equal to 1.

For beneficial effect of the communication method provided in the second aspect and the possible implementations of the second aspect, refer to the beneficial effect achieved by the first aspect and the possible implementations of the first aspect. Details are not described herein again.

According to a third aspect, an embodiment of this application provides a communication apparatus, including: a processing module, configured to determine a first signal, where the first signal includes a communication signal and a sensing signal, and the communication signal and the sensing signal occupy a same time-frequency resource; and a transceiver module, configured to send the first signal to a second apparatus.

In a possible implementation, a first peak value is greater than a second peak value, the first peak value is a frequency domain peak value obtained after time-domain correlation is performed based on the sensing signal and a delayed signal of the sensing signal, and the second peak value is a frequency domain peak value obtained after time-domain correlation is performed based on the communication signal and a delayed signal of the communication signal.

In a possible implementation, the transceiver module is specifically configured to send the first signal by using N target antenna ports, where the N target antenna ports are included in an intersection set between W first antenna ports and M second antenna ports, the W first antenna ports are configured to send the sensing signal, the M second antenna ports are configured to send the communication signal, both W and M are greater than or equal to N, and N is greater than or equal to 1.

In a possible implementation, an $i^{th}$ target antenna port is an $i^{th}$ second antenna port of N second antenna ports, the N second antenna ports are second antenna ports that are of the M second antenna ports and that fall into the intersection set between the W first antenna ports and the M second antenna ports, and i is less than or equal to N and is greater than or equal to 1. The $i^{th}$ second antenna port and an $i^{th}$ first antenna port or an $(N-i+1)^{th}$ first antenna port of N first antenna ports are a same antenna port, and the N first antenna ports are first antenna ports that are of the W first antenna ports and that fall into the intersection set between the W first antenna ports and the M second antenna ports. Alternatively, the $i^{th}$ second antenna port belongs to a $j^{th}$ second antenna port group, the $j^{th}$ second antenna port group is an antenna port group obtained by dividing the N second antenna ports, the $j^{th}$ second antenna port group is a $j^{th}$ first antenna port or an $(M'-j+1)^{th}$ first antenna port of M' first antenna ports, the M' first antenna ports are first antenna ports that are of the W first antenna ports and that fall into the intersection set between the W first antenna ports and the M second antenna ports, j is less than or equal to M' and is greater than or equal to 1, and M' is less than or equal to N and is greater than or equal to 1.

In a possible implementation, in M' second antenna port groups obtained by dividing the N second antenna ports, a $j^{th}$ second antenna port group includes an $(f(j))^{th}$ second antenna port to an $(f(j+1)-1)^{th}$ second antenna port, where f(j) is equal to:

$$min\left(\left\lceil \frac{N}{M'} \right\rceil * \left(j-1\right)+1, N\right) \quad or \quad min\left(\left\lfloor \frac{N}{M'} \right\rfloor * \left(j-1\right)+1, N\right).$$

In a possible implementation, both a power proportion of the communication signal in the first signal and a power proportion of the sensing signal in the first signal are correlated with a modulation ratio $\alpha$ on the time-frequency resource.

In a possible implementation, a time-domain waveform s of the first signal satisfies one of the following:

$$s = \sqrt{\alpha}\,s_1 + \sqrt{1-\alpha}\,s_2\;;$$

and

$$\alpha = \frac{a_1^2}{a_1^2 + a_2^2}$$

$s = a_1 s_1 + a_2 s_2$, where , $a_1$ is the power proportion of the communication signal in the first signal, and $a_2$ is the power proportion of the sensing signal in the first signal; and

$s_1$ is a time-domain waveform of the communication signal, and $s_2$ is a time-domain waveform of the sensing signal.

In a possible implementation, the transceiver module is further configured to: receive first indication information sent by a third apparatus, where the first indication information indicates the modulation ratio $\alpha$; send second indication information to the second apparatus, where the second indication information indicates the modulation ratio $\alpha$; or receive third indication information sent by the second apparatus, where the third indication information indicates the modulation ratio $\alpha$.

In a possible implementation, the first indication information is carried in downlink control information DCI.

In a possible implementation, the second indication information is carried in DCI or sidelink control information SCI.

In a possible implementation, the third indication information is carried in DCI or SCI.

In a possible implementation, at least one of the first indication information, the second indication information, or the third indication information includes a modulation and coding scheme MCS index, and the MCS index corresponds to the modulation ratio $\alpha$.

In a possible implementation, the transceiver module is further configured to receive capability information sent by the second apparatus, where the capability information indicates a sensing interference cancellation capability of the second apparatus, and the sensing interference cancellation capability is used to determine the modulation ratio $\alpha$.

In a possible implementation, when the second apparatus has a sensing interference cancellation capability, the transceiver module sends the second indication information to the second apparatus.

In a possible implementation, the modulation ratio $\alpha$ is correlated with at least one of a signal-to-noise ratio, a code rate, a modulation scheme, and a code length of the second apparatus.

In a possible implementation, the time-frequency resource includes L resource elements, a modulation ratio on a $k^{th}$ resource element of the L resource elements is $\alpha_k$, a modulation ratio on an $h^{th}$ resource element of the L resource elements is $\alpha_h$, $\alpha_k$ is different from $\alpha_h$, both k and h are less than or equal to L, and both k and h are greater than or equal to 1.

For beneficial effect of the communication apparatus provided in the third aspect and the possible implementations of the third aspect, refer to the beneficial effect achieved by the first aspect and the possible implementations of the first aspect. Details are not described herein again.

According to a fourth aspect, an embodiment of this application provides a communication method, including: a transceiver module, configured to receive a first signal from a first apparatus, where the first signal includes a communication signal and a sensing signal, and the communication signal and the sensing signal occupy a same time-frequency resource; and a processing module, configured to determine the communication signal and the sensing signal.

In a possible implementation, the processing module is specifically configured to perform sensing cancellation on the first signal based on a modulation ratio $\alpha$ on the time-frequency resource, to obtain the communication signal.

In a possible implementation, a first peak value is greater than a second peak value, the first peak value is a frequency domain peak value obtained after time-domain correlation is performed based on the sensing signal and a delayed signal of the sensing signal, and the second peak value is a frequency domain peak value obtained after time-domain correlation is performed based on the communication signal and a delayed signal of the communication signal.

In a possible implementation, both a power proportion of the communication signal in the first signal and a power proportion of the sensing signal in the first signal are correlated with the modulation ratio $\alpha$ on the time-frequency resource.

In a possible implementation, a time-domain waveform s of the first signal satisfies one of the following:

$$s = \sqrt{\alpha}\,s_1 + \sqrt{1-\alpha}\,s_2\;;$$

and

$s = a_1s_1 + a_2s_2$, where $\alpha = \dfrac{a_1^2}{a_1^2 + a_2^2}$ , $a_1$ is the power proportion of the communication signal in the first signal, and $a_2$ is the power proportion of the sensing signal in the first signal; and

$s_1$ is a time-domain waveform of the communication signal, and $s_2$ is a time-domain waveform of the sensing signal.

In a possible implementation, the transceiver module is further configured to: receive first indication information sent by a third apparatus, where the first indication information indicates the modulation ratio $\alpha$; receive second indication information sent by the first apparatus, where the second indication information indicates the modulation ratio $\alpha$; or send third indication information to the first apparatus, where the third indication information indicates the modulation ratio $\alpha$. Both the second indication information and the third indication information indicate the modulation ratio $\alpha$.

In a possible implementation, the first indication information is carried in downlink control information DCI.

In a possible implementation, the second indication information is carried in DCI or sidelink control information SCI.

In a possible implementation, the third indication information is carried in DCI or SCI.

In a possible implementation, at least one of the first indication information, the second indication information, or the third indication information includes an MCS index, and the MCS index corresponds to the modulation ratio $\alpha$.

In a possible implementation, the transceiver module is further configured to send capability information to the first apparatus, where the capability information indicates a sensing interference cancellation capability of the communication apparatus, and the sensing interference cancellation capability is used to determine the modulation ratio $\alpha$.

In a possible implementation, when the communication apparatus has a sensing interference cancellation capability, the transceiver module receives the second indication information sent by the first apparatus.

In a possible implementation, the modulation ratio $\alpha$ is correlated with at least one of a signal-to-noise ratio, a code rate, a modulation scheme, and a code length of the communication apparatus.

In a possible implementation, the time-frequency resource includes L resource elements, a modulation ratio on a $k^{th}$ resource element of the L resource elements is $\alpha_k$, a modulation ratio on an $h^{th}$ resource element of the L resource elements is $\alpha_h$, $\alpha_k$ is different from $\alpha_h$, both k and h are less than or equal to L, and both k and h are greater than or equal to 1.

For beneficial effect of the communication apparatus provided in the fourth aspect and the possible implementations of the fourth aspect, refer to the beneficial effect achieved by the first aspect and the possible implementations of the first aspect. Details are not described herein again.

According to a fifth aspect, an embodiment of this application provides a communication apparatus, including: a processor, configured to perform the method in any one of the first aspect, the second aspect, or the possible implementations of the first aspect and the second aspect by running a computer program or by using a logic circuit.

According to a sixth aspect, an embodiment of this application provides a communication system, including a first apparatus configured to perform the method in any one of the first aspect or the possible implementations of the first aspect, and a second apparatus configured to perform the method in any one of the second aspect or the possible implementations of the second aspect.

According to a seventh aspect, an embodiment of this application provides a computer-readable storage medium, configured to store computer program instructions. The computer program enables a computer to perform the method in any one of the first aspect, the second aspect, or the possible implementations of the first aspect and the second aspect.

According to an eighth aspect, an embodiment of this application provides a computer program product, including computer program instructions. The computer program instructions enable a computer to perform the method in any one of the first aspect, the second aspect, or the possible implementations of the first aspect and the second aspect.

According to a ninth aspect, an embodiment of this application provides a computer program. The computer program enables a computer to perform the method in any one of the first aspect, the second aspect, or the possible implementations of the first aspect and the second aspect.

## BRIEF DESCRIPTION OF DRAWINGS

FIG. 1 is a diagram of a transmit signal and a reflected signal according to an embodiment of this application;
FIG. 2a is a diagram of a monostatic system for communication and sensing according to an embodiment of this application;
FIG. 2b is a diagram of a bi-static system for communication and sensing according to an embodiment of this application;

FIG. 3a and FIG. 3b are diagrams of bi-static systems for communication and sensing integration according to an embodiment of this application;

FIG. 4 is a diagram of a communication system applicable to a communication method according to an embodiment of this application;

FIG. 5 is a flowchart of interaction of a communication method according to an embodiment of this application;

FIG. 6 is a diagram of beams of a sensing signal and a communication signal according to an embodiment of this application;

FIG. 7 is a diagram of a modulation ratio according to an embodiment of this application;

FIG. 8 is a schematic flowchart of interaction of a communication method according to an embodiment of this application;

FIG. 9a and FIG. 9b are schematic flowcharts of transmission of a signal for communication and sensing according to an embodiment of this application;

FIG. 10 is a block diagram of a communication apparatus according to an embodiment of this application; and

FIG. 11 is another block diagram of a communication apparatus according to an embodiment of this application.

## DESCRIPTION OF EMBODIMENTS

The following describes technical solutions of this application with reference to accompanying drawings.

Sensing refers to emitting electromagnetic energy into space, and receiving an electromagnetic wave reflected by an object in the space, to calculate information about the object, for example, a position, a direction, a height, a speed, a size, and another parameter, and detect internal and external shapes and structures of the object, that is, exploring transmission, echoes, reflection, and scattering of radio waves, to sense and better understand the physical world.

Currently, commonly used sensing signals include but are not limited to: a frequency-modulated continuous wave (frequency-modulated continuous wave, FMCW), a continuous wave (continuous wave, CW), or an index modulation chirp (index modulation chirp). The chirp is a phase that changes with time.

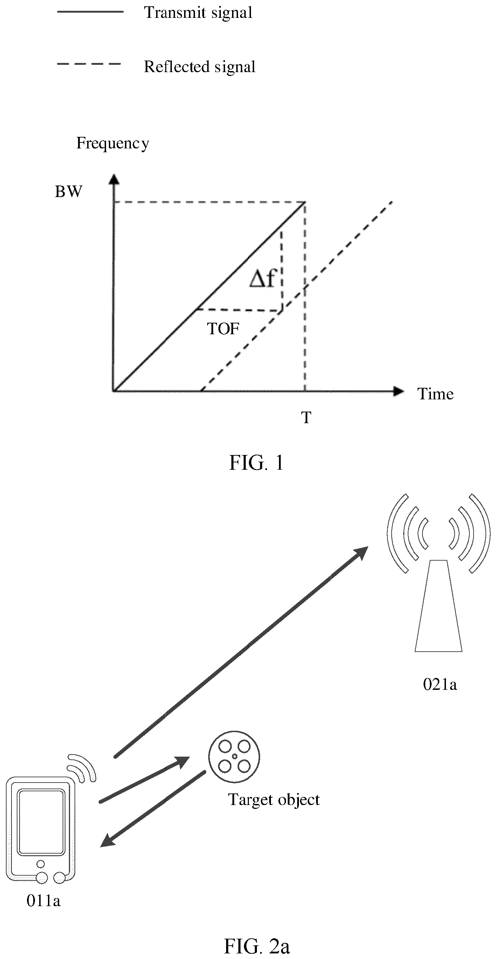

The FMCW is a radar with low costs and a simple structure. A working principle of the FMCW is that a transmit end sends a continuous wave whose frequency linearly increases with time, for example, a transmit signal shown in FIG. 1, where the transmit signal is reflected by an object, and due to a delay on a propagation path, there is a frequency difference $\Delta f$ between a reflected signal and the transmit signal. The frequency difference is positively correlated with a propagation delay $\tau$, as shown in Formula (1):

$$\Delta f = R \cdot \tau = \frac{BW}{T} \cdot \frac{2 \cdot d}{c} \qquad (1)$$

Herein, R is a rate at which the frequency of the frequency-modulated continuous wave changes, which has a specific value of a ratio of a bandwidth $BW$ of a radar signal to a signal period $T$, $d$ is a distance between the object and the radar, and c is a propagation speed of an electromagnetic wave.

At a receive end of the radar, a receive signal and a transmit signal are mixed, to obtain a frequency difference between the receive signal and the transmit signal. The distance between the object and the radar can be calculated based on $\Delta f$, and a reflection coefficient of the object (determined by an attribute of the object) can be calculated based on reflected energy.

Another sensing signal is similar thereto. For brevity, details are not described again. It should be understood that communication cannot be implemented by using any one of the foregoing sensing signals.

Integrated communication and sensing refers to integrating (integrate) an electromagnetic signal for communication and an electromagnetic signal for sensing, to implement high-quality wireless communication and high-precision sensing. Systems for integrated communication and sensing may be classified into monostatic (monostatic) systems and bi-static (bi-static) systems depending on whether a transmit end and a receive end of a sensing signal are co-sited or not.

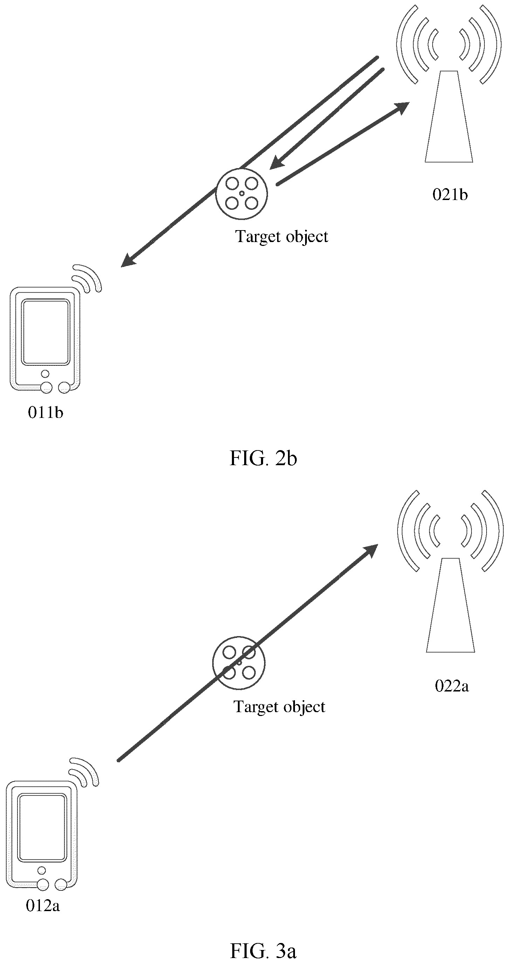

As shown in FIG. 2a, in a monostatic system, a signal for communication and sensing sent by a terminal device 011a is received by a network device (for example, a base station) 021a, to implement uplink communication, and the signal for communication and sensing sent by the terminal device 011a is received by the terminal device 011a after being reflected by a target object, to implement sensing of the target object. Similarly, as shown in FIG. 2b, a signal for communication and sensing sent by a network device 021b is received by a terminal device 011b, to implement downlink communication, and the signal for communication and sensing sent by the network device 021b is received by the network device 021b after being reflected by a target object, to implement sensing of the target object.

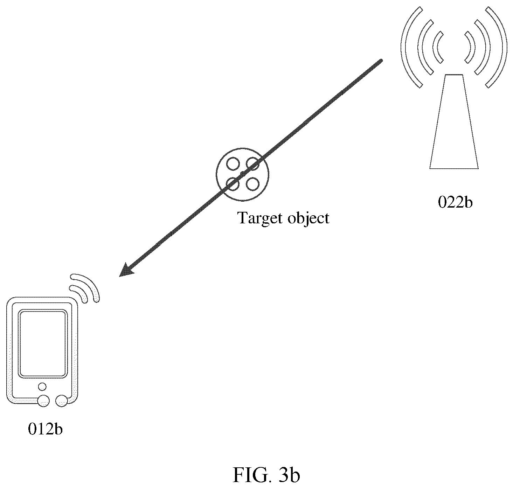

As shown in FIG. 3a, in a bi-static system, a terminal device 012a sends a signal for communication and sensing to a network device 022a, and the signal for communication and sensing is received by the network device 022a after passing through a target object, to implement uplink communication and sensing of the target object. Similarly, as shown in FIG. 3b, in a bi-static system, a network device 022b sends a signal for communication and sensing to a terminal device 012b, and the signal for communication and sensing is received by the terminal device 012b after passing through a target object, to implement downlink communication and sensing of the target object.

In bi-static systems shown in FIG. 3a and FIG. 3b, the signal for communication and sensing may be an integrated signal. For example, a pilot signal for sensing is inserted into a communication signal, and the pilot signal may be preconfigured, configured by using signaling, or agreed upon by a protocol, so that the pilot signal is a pilot signal that is used for sensing and that is known to both a transmit end and a receive end.

In addition, the systems for integrated communication and sensing further include a multi-static (multi-static) system, and the multi-static system may be a hybrid system including a monostatic system and a bi-static system.

In the monostatic system and the multi-static system, integrated communication and sensing may also be implemented based on the foregoing signal for communication and sensing.

It should be noted that, in addition to uplink and downlink communication scenarios shown in FIG. 2a to FIG. 3b, integrated communication and sensing may be further implemented based on sidelink transmission. For example, in a bi-static system, a transmit end of a signal for communication and sensing is a first terminal, and a receive end of the signal for communication and sensing is a second terminal.

The communication signal includes but is not limited to: an orthogonal frequency division multiplexing (orthogonal frequency division multiplexing, OFDM) signal, an orthogonal time frequency space (orthogonal time frequency space, OTFS) signal, a discrete Fourier transform-spread-orthogonal frequency division multiplexing (discrete Fourier transform-spread-orthogonal frequency division multiplexing, DFT-S-OFDM) signal, an offset quadrature amplitude modulation (offset quadrature amplitude modulation, OQAM) signal, or the like.

It may be understood that the pilot signal for sensing is inserted into the communication signal. This occupies a time-frequency resource for communication and reduces a communication capacity.

Based on this, in the integrated communication and sensing solution provided in embodiments of this application, a sensing signal and a communication signal occupy a same time-frequency resource. In other words, a dual-waveform signal is obtained by superimposing the communication signal and the sensing signal. In addition, the dual-waveform signal is used as a signal for communication and sensing to implement communication and sensing. In this way, the sensing signal does not occupy a time-frequency resource for communication, thereby mitigating impact of the sensing signal on a communication capacity.

A communication method provided in this application may be applied to various communication systems, for example, a long term evolution (Long Term Evolution, LTE) system, a 5G mobile communication system, a 6th generation (6th Generation, 6G) mobile communication system that is evolved after 5G. The 5G mobile communication system or the 6G mobile communication system may include non-standalone (non-standalone, NSA) networking and/or standalone (standalone, SA) networking.

The communication method provided in this application may be further applied to machine-type communication (machine-type communication, MTC), a long-term evolution technology for inter-machine communication (Long Term Evolution-machine, LTE-M), a device-to-device (device-to-device, D2D) network, a machine-to-machine (machine-to-machine, M2M) network, an internet of things (internet of things, IoT) network, or another network.

In embodiments of this application, a network device may be any device with a wireless transceiver function. The network device includes but is not limited to: an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission-reception point (transmission-reception point, TRP). Alternatively, the network device may be a mobile switching center, a device that undertakes a base station function in device-to-device (Device-to-Device, D2D), vehicle-to-everything (vehicle-to-everything, V2X), or machine-to-machine (machine-to-machine, M2M) communication, or the like. Alternatively, the network device may be a gNB in a 5G system, or one or a group of (including a plurality of antenna panels) antenna panels of a base station in a 5G system. Alternatively, the network device may be a network node that constitutes a gNB or a transmission point, for example, a BBU or a distributed unit (distributed unit, DU). This is not specifically limited in embodiments of this application.

In some deployments, the gNB may include a central unit (central unit, CU) and a DU. The gNB may further include an active antenna unit (active antenna unit, AAU). The CU and the DU separately implement some functions of the gNB, and the CU and the DU may communicate with each other by using an F1 interface. The AAU may implement some physical layer processing functions, radio frequency processing, and a function related to an active antenna.

It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, a terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer with a wireless transceiver function (such as a notebook computer or a palmtop computer), a customer premises equipment (customer premises equipment, CPE), a smart point of sale (point of sale, POS) machine, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a system evolved after 5G, or the like.

It should be understood that specific forms of the network device and the terminal device are not limited in this application.

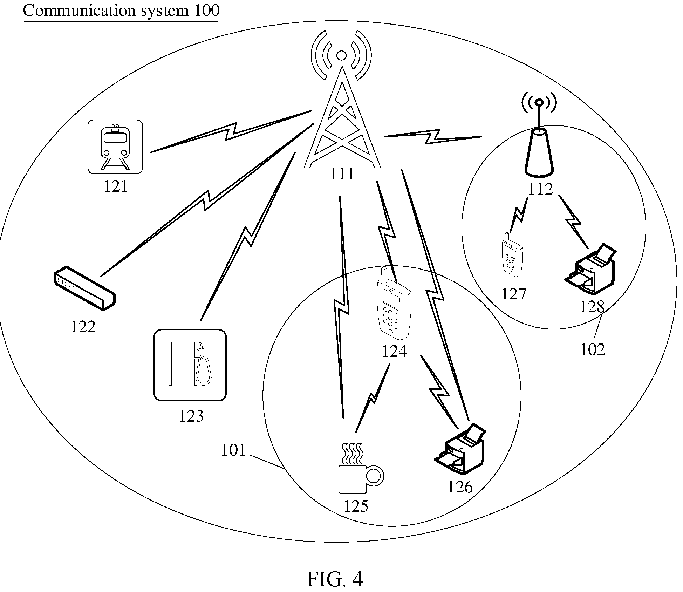

For ease of understanding of embodiments of this application, a communication system applicable to embodiments of this application is first described in detail with reference to FIG. 4. FIG. 4 is a diagram of a communication system applicable to the communication method according to an embodiment of this application. As shown in FIG. 4, a communication system 100 may include a network device and a terminal device. There may be one or more network devices and one or more terminal devices, for example, network devices 111 and 112 and terminal devices 121 to 128 shown in FIG. 1. In the communication system 100, the network device 111 may communicate with one or more of the terminal devices 121 to 126 by using a wireless air interface, and the network device 111 may communicate with one or both of the terminal devices 127 and 128 by using the network device 112. In addition, the terminal devices 124 to 126 may form a communication system 101. In the communication system 101, the terminal device 124 may communicate with one or both of the terminal devices 125 and 126 by using a wireless air interface. The network device 112 and the terminal devices 127 and 128 may form a communication system 102. In the communication system 102, the network device 112 may communicate with one or both of the terminal devices 127 and 128 by using a wireless air interface.

It should be understood that the communication system 101 may be a subsystem of the communication system 100, or a communication system independent of the communication system 100. The communication system 102 may be a subsystem of the communication system 100, or a communication system independent of the communication system 100.

It should be further understood that FIG. 4 is merely an example, and shows two network devices and eight terminal devices in the communication system 100, three terminal devices in the communication system 101, and one network device and two terminal devices in the communication system 102. However, this shall not constitute any limitation on this application. Any one of the foregoing communication systems may include more or fewer network devices, or include more or fewer terminal devices. This is not limited in this embodiment of this application.

During uplink transmission of a signal for communication and sensing, a transmit end (for example, the terminal device 012a in FIG. 3a) may be implemented as, for example, one of the terminal devices 121 to 124 in FIG. 4, and a receive end (for example, the network device 022a in FIG. 3a) may be implemented as the network device 111 in FIG. 4; or a transmit end may be implemented as the terminal device 127 or 128 in FIG. 4, and a receive end may be implemented as the network device 112 in FIG. 4.

During downlink transmission of a signal for communication and sensing, a transmit end (for example, the network device 022b in FIG. 3b) may be implemented as the network device 111 in FIG. 4, and a receive end (for example, the terminal device 021b in FIG. 3b) may be implemented as one of the terminal devices 121 to 124 in FIG. 4; or a transmit end may be implemented as the network device 112 in FIG. 4, and a receive end may be implemented as the terminal device 127 or 128.

During sidelink transmission of a signal for communication and sensing, a transmit end may be implemented as the terminal device 124 in FIG. 4, and a receive end may be implemented as the terminal device 125 or 126 in FIG. 4; or a transmit end may be implemented as the terminal device 125 or 126 in FIG. 4, and a receive end may be implemented as the terminal device 124 in FIG. 4. It should be noted that, during sidelink transmission of the signal for communication and sensing, both the transmit end and the receive end may communicate with the network device, to receive a configuration of the network device.

In the following, a first apparatus may be implemented as the transmit end of the signal for communication and sensing, or implemented as a component in the transmit end, for example, a chip, a chip system, or another functional module that can invoke a program and execute the program. In the following, a second apparatus may be implemented as the receive end of the signal for communication and sensing, or implemented as a component in the receive end, for example, a chip, a chip system, or another functional module that can invoke a program and execute the program. In the following, a third apparatus may be implemented as the network device that is in communication connection to the transmit end and the receive end during sidelink transmission.

For ease of understanding of embodiments of this application, the following several descriptions are provided.

First, in the following embodiments, "first", "second", "third", and various numerical symbols are merely distinguished for ease of description, and are not intended to limit the scope of embodiments of this application. For example, different signals, different apparatuses, different peak values, different antenna ports, and different indication information are distinguished.

Second, "predefinition" may be implemented by prestoring corresponding code or a table in a device (for example, including a terminal device and a network device), or may be implemented in another manner that may indicate related information. A specific implementation thereof is not limited in this application.

"Preconfiguration" may be implemented by prestoring corresponding code or a table in a device (for example, including a terminal device and a network device), or may be implemented in another manner that may indicate related information, or may be implemented through signaling preconfiguration, for example, implemented by a network device through signaling preconfiguration or in another manner. A specific implementation thereof is not limited in this application.

Third, "protocols" in embodiments of this application may be a standard protocol in the communication field, for example, may include an LTE protocol, a new radio (New Radio, NR) protocol, a Wi-Fi protocol, and a related protocol applied to a communication system evolved after 5G. This is not limited in this application.

The following describes the communication method provided in embodiments of this application with reference to the accompanying drawings.

FIG. 5 is a flowchart of interaction of a communication method 200 according to an embodiment of this application. As shown in FIG. 5, the method 200 may include some or all of S210 to S230. The following describes steps in the method 200.

S210: A first apparatus determines a first signal, where the first signal includes a communication signal and a sensing signal, and the communication signal and the sensing signal occupy a same time-frequency resource.

S220: The first apparatus sends the first signal to a second apparatus. Correspondingly, the second apparatus receives the first signal.

S230: The second apparatus determines the communication signal and the sensing signal that are in the first signal.

It should be noted that the first signal may be a signal for communication and sensing. **In** the first signal, that the communication signal and the sensing signal occupy the same time-frequency resource may be understood as that signal superposition is performed on the communication signal and the sensing signal on resource elements (resource elements, REs). The first signal may be a dual-waveform signal obtained after the communication signal and the sensing signal are superposed.

In this embodiment of this application, the communication signal in the first signal may include but is not limited to the foregoing OFDM signal, the foregoing OTFS signal, the foregoing DFT-S-OFDM signal, and the foregoing OQAM signal. The sensing signal in the first signal may include but is not limited to the foregoing FMCW, the foregoing CW, and the foregoing index modulation chirp.

In some embodiments, to prevent the sensing signal from causing interference to receiving of the communication signal when the second apparatus determines the sensing signal and the communication signal, in the first signal determined by the first apparatus, the following characteristic may exist between the sensing signal and the communication signal: A frequency domain peak value (that is, a first peak value) obtained after time-domain correlation is performed on the sensing signal and a delayed signal of the sensing signal is greater than a frequency domain peak value (that is, a second peak value) obtained after time-domain correlation is performed on the communication signal and a delayed signal of the communication signal. In addition, a larger difference between the first peak value and the second peak value indicates smaller interference of the sensing signal to the communication signal present when the first signal is received.

For example, performing time-domain correlation on a sensing signal $P(t)$ and a delayed signal $P(t-\tau)$ of the sensing signal may be: performing time-domain point multiplication on the sensing signal $P(t)$ and the delayed signal $P(t-\tau)$ of the sensing signal, to obtain a time-domain correlation result $Co(t)$. Refer to Formula (1):

$$\mathrm{Co}(t) = \mathrm{P}(t) \cdot \mathrm{P}(t - \tau) \qquad (1)$$

The frequency domain peak value is a peak value at a position at which a target distance (namely, a signal transmission delay) is converted into a frequency difference after time-domain correlation. An FMCW signal is used as an example for $\Delta f = K \cdot \tau$, and $\tau = 2R / C$, where $R$ is the target distance, $C$ is a speed of light, $K$ is a slope of the FMCW signal, *K=Bw/T, Bw* is a bandwidth of the FMCW signal, *T* is a period length of the FMCW signal, *Δf* is frequency difference information of target distance conversion, and a peak value at a frequency of *Δf* is based on the first peak value.

A process of performing time-domain correlation on the communication signal and the delayed signal of the communication signal to obtain the second peak value is similar to this process. Details are not described herein again.

It should be noted that, when the first peak value is greater than the second peak value, in a process in which the second apparatus performs frequency domain processing to implement sensing, the communication signal does not cause interference to a frequency domain signal. In addition, the second apparatus is not correlated with the frequency domain peak value of the communication signal when receiving the signal. Therefore, the sensing signal does not interfere with receiving of the communication signal due to the first peak value being greater than the second peak value.

In S220, information may be transmitted between the first apparatus and the second apparatus by using an antenna port. One antenna port may correspond to one physical transmit antenna, or may correspond to a plurality of physical transmit antennas (referred to as antennas in the following). Each antenna port corresponds to one time-frequency resource grid (time-frequency resource grid), and has its own reference signal. One antenna port corresponds to one channel, and a terminal needs to perform channel estimation and data demodulation based on a reference signal corresponding to the antenna port.

It should be noted that a correspondence between an antenna port and an antenna may be preset in the first apparatus. Alternatively, a correspondence between an antenna port and an antenna may be preconfigured, for example, the first apparatus receives configuration information sent by a network device (for example, the second apparatus), to configure the correspondence between the antenna port and the antenna. Alternatively, a correspondence between an antenna port and an antenna may be agreed upon by a protocol. For example, the correspondence between the antenna port and the antenna may be that an antenna port #0 corresponds to an antenna #0 to an antenna #3, and an antenna port #1 corresponds to an antenna #4 to an antenna #7. Certainly, different antenna ports may alternatively include a same antenna. This is not limited in this application.

The first apparatus may send the communication signal to one or more second apparatuses by using M second antenna ports, where M is greater than or equal to 1. For example, the first apparatus is a network device, and the second apparatus is a terminal device. The network device may send a downlink communication signal to different terminal devices by using a plurality of antenna ports. In addition, the first apparatus may send the sensing signal to one or more second apparatuses by using W first antenna ports, where W is greater than or equal to 1.

In consideration of application of integrated communication and sensing in a MIMO scenario, different antenna ports are configured for communication, sensing, and integrated communication and sensing, to implement flexible configuration based on different device requirements in the MIMO scenario. For example, a communication signal is sent by using some antenna ports, a sensing signal is sent by using some antenna ports, and a superposed first signal is sent by using some antenna ports. Refer to FIG. 6. The sensing signal and the communication signal may be sent by using different antenna ports, there is an intersection set between the antenna port for sending the sensing signal and the antenna port for sending the communication signal, and the first signal is sent on an antenna port in the intersection set. The foregoing example is still used. The first apparatus may preset the antenna port #0 as the antenna port for sending the communication signal, and preset the antenna port #1 as the antenna port for sending the sensing signal. Alternatively, the first apparatus may receive the configuration information of the network device (for example, the second apparatus), to configure the antenna port #0 as the antenna port for sending the communication signal, and to configure the antenna port #1 as the antenna port for sending the sensing signal.

The following describes an example of a relationship between the second antenna port for sending the communication signal, the first antenna port for sending the sensing signal, and a target antenna port for sending the first signal.

The M second antenna ports and the W first antenna ports may include N same antenna ports (namely, N target antenna ports). Optionally, the M second antenna ports are a subset of the W first antenna ports. For example, the W first antenna ports are antenna ports #0 to #7, the M second antenna ports are antenna ports #0 to #2, and the N target antenna ports are the antenna ports #0 to #2. Alternatively, the W first antenna ports are a subset of the M second antenna ports. For example, the M second antenna ports are antenna ports #0 to #7, the W first antenna ports are antenna ports #3 to #6, and the N target antenna ports are the antenna ports #3 to #6. Alternatively, there is an intersection set between the M second antenna ports and the W first antenna ports. For example, the W first antenna ports are antenna ports #0 to #4, the M second antenna ports are antenna ports #3 to #7, and the N target antenna ports are the antenna ports #3 and #4. Alternatively, the M second antenna ports, the W first antenna ports, and the N target antenna ports are all same antenna ports, for example, antenna ports #0 to #7. In this case, signal superposition of the communication signal and the sensing signal that are sent by the first apparatus to the second apparatus is implemented on the antenna ports #0 to #7, to form and send the first signal.

In some embodiments, the first antenna port may correspond to a plurality of second antenna ports. For example, eight second antenna ports are antenna ports #0 to #7, a 1st first antenna port of four first antenna ports is the antenna ports #0 and #1, a 2nd first antenna port is the antenna ports #2 and #3, a 3rd first antenna port is the antenna ports #4 and #5, and

a 4th first antenna port is the antenna ports #6 and #7.

It should be understood that the W first antenna ports are a subset of the M second antenna ports, or may be understood as that there is an intersection set between the W first antenna ports and the M second antenna ports, and the intersection set is the W first antenna ports. Similarly, the M second antenna ports are a subset of the W first antenna ports, or may be understood as that there is an intersection set between the M second antenna ports and the W first antenna ports, and the intersection set is the M second antenna ports.

For example, an $i^{th}$ target antenna port of the N target antenna ports for transmitting the first signal is an $i^{th}$ second antenna port of N second antenna ports, that is, the N target antenna ports and the N second antenna ports are respectively same antenna ports, the $i^{th}$ target antenna port is any one of the N target antenna ports, and i is less than. The N second antenna ports are second antenna ports that are of the M second antenna ports and that fall into the intersection set between the W first antenna ports and the M second antenna ports. For example, the W first antenna ports are antenna ports #0 to #3, and the M second antenna ports are antenna ports #1 to #7. In this case, the second antenna ports that fall into the intersection set between the W first antenna ports and the M second antenna ports are the antenna ports #1 to #3. In this case, a 1st target antenna port is a 1st second antenna port (for example, the antenna port #1), a 2nd target antenna port is a 2nd second antenna port (for example, the antenna port #2), and a 3rd target antenna port is a 3rd second antenna port (for example, the antenna port #3).

The foregoing example is still used. The following describes, in two possible implementations, a relationship between the first antenna port and the second antenna port that fall into the intersection set between W first antenna ports and M second antenna ports.

In a first possible implementation, N second antenna ports are in a one-to-one correspondence with N first antenna ports that fall into the intersection set between the W first antenna ports and the M second antenna ports, that is, the N second antenna ports and the N first antenna ports are respectively same antenna ports. For example, an $i^{th}$ first antenna port of the N first antenna ports and an $i^{th}$ second antenna port of the N second antenna ports are a same antenna port, or an $i^{th}$ first antenna port of the N first antenna ports and an $(N-i+1)^{th}$ second antenna port of the N second antenna ports are a same antenna port.

In a second possible implementation, one first antenna port may correspond to one or more different second antenna ports, and the one or more second antenna ports corresponding to the first antenna port are referred to as one second antenna port group. N second antenna ports may be divided into M' second antenna port groups. In an example, a $j^{th}$ second antenna port group in the M' second antenna port groups is a $j^{th}$ first antenna port of M' first antenna ports. In other words, the $j^{th}$ first antenna port includes second antenna ports in the $j^{th}$ second antenna port group. In another example, a $j^{th}$ second antenna port group is an $(M'-j+1)^{th}$ first antenna port of M' first antenna ports. In other words, the $(M'-j+1)^{th}$ first antenna port includes second antenna ports in the $j^{th}$ second antenna port group. j is less than or equal to M' and is greater than or equal to 1, and M' is less than or equal to N and is greater than or equal to 1.

That the first antenna port corresponds to the second antenna port group may be understood as that a channel corresponding to the first antenna port is correlated with a sum of channels corresponding to all second antenna ports in the second antenna port group.

It should be understood that the channel corresponding to the first antenna port is correlated with the sum of the signals corresponding to the plurality of second antenna ports, so that a quantity of first antenna ports can be reduced, and complexity of channel estimation (or sensing estimation) performed when the second apparatus receives the sensing signal can be reduced. However, in the intersection set between the W first antenna ports and the M second antenna ports, when the first antenna ports are in a one-to-one correspondence with the second antenna ports, different sensing signals can be transmitted to more different second apparatuses.

For example, in the M' second antenna port groups obtained by dividing the N second antenna ports, the $j^{th}$ second antenna port group includes an $(f(j))^{th}$ second antenna port to an $(f(j+1)-1)^{th}$ second antenna port, where $f(j)$ is equal to:

$$min\left(\left\lceil \frac{N}{M'}\right\rceil*\left(j-1\right)+1, N\right) \text{ or } min\left(\left\lfloor \frac{N}{M'}\right\rfloor*\left(j-1\right)+1, N\right).$$

Herein, $\lceil\ \rceil$ indicates rounding up, and $\lfloor\ \rfloor$ indicates rounding down. When rounding up is performed, $\left\lceil \dfrac{N}{M'}\right\rceil$, may also be represented as $floor(N/M')$, and when rounding down is performed, $\left\lfloor \dfrac{N}{M'}\right\rfloor$ may also be represented as *ceil(N/M')*. A 1st second antenna port may be an antenna port #0.

For example, it is assumed that there are five second antenna ports that fall into the intersection set between the W first antenna ports and the M second antenna ports, the second antenna ports are respectively antenna ports #0 to #4, and there are two first antenna ports that fall into the intersection set between the W first antenna ports and the M second

$$min\left(\left\lceil \frac{N}{M'} \right\rceil * (j-1) + 1, N\right)$$

antenna ports. Based on , a 1st second antenna port group corresponding to a 1st first antenna port of the two first antenna ports includes a 1st second antenna port to a 3rd second antenna port (namely, the antenna ports #0 to #2), and a 2nd second antenna port group corresponding to a 2nd first antenna port includes a 4th second antenna port and a 5th second antenna port (namely, the antenna ports #3 and #4). It should be understood that, the 2nd second antenna port obtained through calculation based on the foregoing formula should further include a 6th second antenna port (for example, an antenna port #5). Because the 6th second antenna port does not exist, the antenna port that does not exist is ignored.

It is still assumed that there are five second antenna ports that fall into the intersection set between the W first antenna ports and the M second antenna ports, the second antenna ports are respectively antenna ports #0 to #4, and there are two first antenna ports that fall into the intersection set between the W first antenna ports and the M second

$$min\left(\left\lfloor \frac{N}{M'} \right\rfloor * (j-1) + 1, N\right)$$

antenna ports. Based on , a 1st second antenna port group corresponding to a 1st first antenna port of the two first antenna ports includes a 1st second antenna port and a 2nd second antenna port (namely, the antenna ports #0 and #1), and a 2nd second antenna port group corresponding to a 2nd first antenna port includes a 3rd second antenna port to a 5th second antenna port (namely, the antenna ports #2 to #4).

When N can be divisible by M', $f(i)$ holds. For example, there are four second antenna ports that fall into the intersection set between the W first antenna ports and the M second antenna ports, the second antenna ports are respectively antenna ports #0 to #3, and there are two first antenna ports that fall into the intersection set between the W

$$min\left(\frac{N}{M'} * (j-1) + 1, N\right)$$

first antenna ports and the M second antenna ports. Based on , a 1st second antenna port group corresponding to a 1st first antenna port of the two first antenna ports includes a 1st second antenna port and a 2nd second antenna port (namely, the antenna ports #0 and #1), and a 2nd second antenna port group corresponding to a 2nd first antenna port includes a 3rd second antenna port and a 4th second antenna port (namely, the antenna ports #2 and #3).

In some embodiments, both a power proportion of the communication signal in the first signal and a power proportion of the sensing signal in the first signal are correlated with a modulation ratio $\alpha$ on the time-frequency resource. The first apparatus may determine the first signal based on the modulation ratio $\alpha$. It should be noted that a sum of the power proportion of the communication signal in the first signal and the power proportion of the sensing signal in the first signal may be 1 or not 1. This is not limited in this application.

In an example, a time-domain waveform s of the first signal may satisfy Formula (2):

$$s = \sqrt{\alpha}\, s_1 + \sqrt{1-\alpha}\, s_2 \qquad (2)$$

Herein, $s_1$ is a time-domain waveform of the communication signal, and $s_2$ is a time-domain waveform of the sensing signal. In the foregoing example, a sum of power of the communication signal and power of the sensing signal is stable, so that a radio frequency component including a radio frequency amplifier can work in a stable state.

In another example, a time-domain waveform s of the first signal may satisfy Formula (3):

$$s = a_1 s_1 + a_2 s_2, \quad \alpha = \frac{a_1^2}{a_1^2 + a_2^2} \qquad (3)$$

Herein, $a_1$ is the power proportion of the communication signal in the first signal, and $a_2$ is the power proportion of the sensing signal in the first signal.

In the foregoing example, a sum of power of the communication signal and power of the sensing signal is not limited to being continuously stable. In this case, power allocation may be performed for the communication signal and the sensing signal in a more flexible manner. In addition, the first signal in the foregoing example tends to set the power of the communication signal high, to ensure communication reliability.

In some embodiments, the modulation ratio $\alpha$ may be predefined; or the modulation ratio $\alpha$ may be preconfigured. For example, when the modulation ratio $\alpha$ is predefined only by the first apparatus, the first apparatus sends signaling to the second apparatus to configure the modulation ratio $\alpha$; or when the modulation ratio $\alpha$ is predefined only by the second apparatus, the second apparatus sends signaling to the first apparatus to configure the modulation ratio $\alpha$; or the modulation ratio $\alpha$ may be defined by a protocol.

In some embodiments, the pre-configured modulation ratio $\alpha$ may include the following several possible examples:

Example 1: The first signal is transmitted between the first apparatus and the second apparatus by using a sidelink. A third apparatus separately sends first indication information to the first apparatus and the second apparatus. The first indication information indicates the modulation ratio $\alpha$. Optionally, the first indication information may be carried in downlink control information (downlink control information, DCI).

Example 2: The first signal is transmitted between the first apparatus and the second apparatus by using a sidelink. The first apparatus sends second indication information to the second apparatus. The second indication information indicates the modulation ratio $\alpha$. Optionally, the second indication information may be carried in sidelink control information (sidelink control information, SCI).

Example 3: The first signal is transmitted between the first apparatus and the second apparatus by using a sidelink. The first apparatus receives third indication information sent by the second apparatus. The third indication information indicates the modulation ratio $\alpha$. Optionally, the third indication information may be carried in SCI.

Example 4: The first signal is transmitted between the first apparatus and the second apparatus by using a downlink. The first apparatus sends second indication information to the second apparatus. The second indication information indicates the modulation ratio $\alpha$. Optionally, the second indication information is carried in DCI.

It should be noted that the indication information in any one of the foregoing examples, for example, the first indication information, the second indication information, and the third indication information, may indicate the modulation ratio $\alpha$ by using a known field or an unknown (newly added) field. To reduce signaling overheads, the indication information in any one of the foregoing examples may include a modulation and coding scheme (modulation and coding scheme, MCS) index, and the modulation ratio $\alpha$ is indicated by using the MCS index. Optionally, there is a correspondence between the MCS index and the modulation ratio $\alpha$, and the correspondence may be reflected by using an MCS table. The MCS table may include the correspondence between the MCS index and the modulation ratio $\alpha$. The MCS table may further include one or more of a modulation order, a code rate, and a spectral rate. For example, refer to Table 1.

Table 1

| MCS index ($I_{MCS}$) | Modulation order ($Q_m$) | Code rate (R)x1024 | Spectral rate | Modulation ratio $\alpha$ |
|---|---|---|---|---|
| 0 | 2 | 120 | 0.2344 | 0.9 |
| 1 | 2 | 193 | 0.3770 | 0.8 |
| 2 | 2 | 308 | 0.6016 | 0.7 |
| 3 | 2 | 449 | 0.8770 | 0.6 |
| 4 | 2 | 602 | 1.1758 | 0.5 |
| 5 | 4 | 378 | 1.4766 | 0.4 |
| 6 | 4 | 434 | 1.6953 | 0.35 |
| 7 | 4 | 490 | 1.9141 | 0.3 |
| 8 | 4 | 553 | 2.1602 | 0.25 |
| 9 | 4 | 616 | 2.4063 | 0.2 |
| ... | ... | ... | ... | ... |

As shown in Table 1, different MCS indexes may correspond to different modulation ratios, and a larger MCS index indicates a smaller modulation ratio $\alpha$. Values of the modulation ratios $\alpha$ in Table 1 are merely examples rather than limitation descriptions. Table 1 is merely an example. The correspondence between the MCS index and the modulation ratio $\alpha$ may be independently configured. For example, the correspondence between the MCS index and the modulation

ratio $\alpha$ is added by using an independent table, that is, the MCS table does not include a column of the modulation ratio $\alpha$.

That each MCS index in Table 1 corresponds to one modulation ratio $\alpha$ value is merely an example, and different MCS indexes may alternatively correspond to a same modulation ratio $\alpha$ value. The correspondence between the modulation ratio $\alpha$ and the MCS index may also be a correspondence between the modulation ratio $\alpha$ and a code rate, a modulation order, or a spectral rate. Each code rate may correspond to one or more modulation ratios, each modulation order may correspond to one or more modulation ratios, or each spectral rate may correspond to one or more modulation ratios. That the modulation ratio $\alpha$ corresponds to the modulation order is an implementation in which one MCS index corresponds to a plurality of modulation ratios.

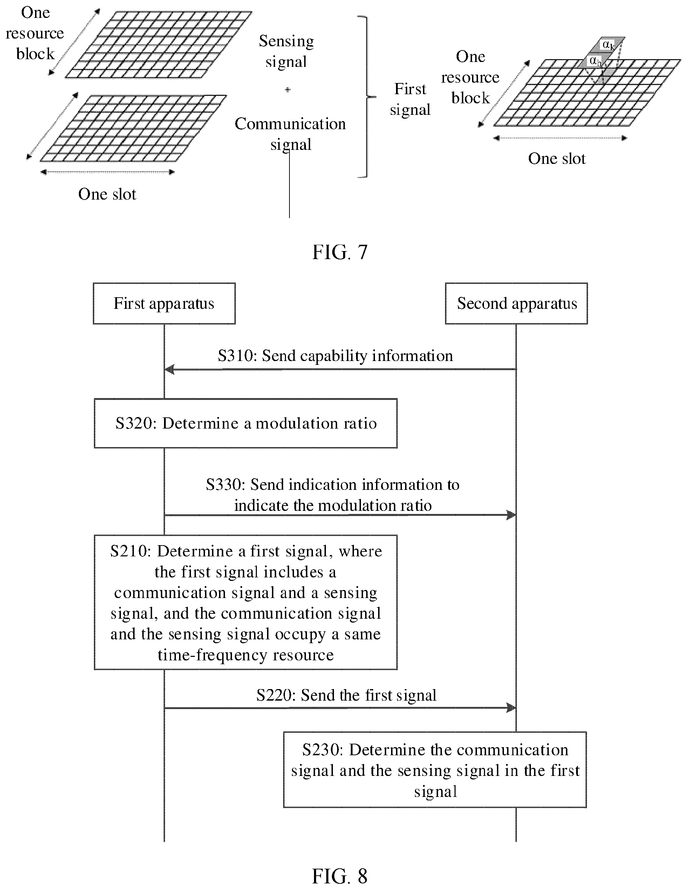

In some embodiments, the time-frequency resource includes L REs, where L is greater than or equal to 1, and modulation ratios on the L resource elements REs may be the same or may be different. For example, a modulation ratio on a $k^{th}$ resource element of the L resource elements is $\alpha_k$, a modulation ratio on an $h^{th}$ resource element of the L resource elements is $\alpha_h$, and $\alpha_k$ and $\alpha_h$ may be the same or different. Refer to FIG. 7. Signal superposition is performed on a communication signal and a sensing signal in one resource element based on the modulation ratios on the resource elements. In the foregoing embodiment, that an RE is a modulation granularity of a modulation ratio is merely used as an example for description. This is not limited in this application. For example, the RE may be replaced with a resource block (resource block, RB), that is, each RB in the time-frequency resource corresponds to one modulation ratio, and modulation ratios on RBs may be the same or different.

FIG. 8 is a schematic flowchart of interaction of a communication method 300 according to an embodiment of this application. Based on the embodiment shown in FIG. 5, a downlink communication scenario in Example 4 is used as an example. When the communication method is applied to another example (for example, any one of Example 1 to Example 3), a same or similar implementation and same or similar technical effect are achieved, and a difference lies in different execution bodies. The method 300 further includes some or all processes in S310 to S330.

S310: A second apparatus sends capability information to a first apparatus. Correspondingly, the first apparatus receives the capability information.

S320: The first apparatus determines a modulation ratio $\alpha$.

S330: The first apparatus sends indication information (for example, the foregoing second indication information) to the second apparatus, to indicate the modulation ratio $\alpha$.

A sequence of performing S330, S210, and S220 is not limited in this application. That is, the first apparatus may send the indication information before or after sending a first signal to the second apparatus, to indicate the modulation ratio $\alpha$; or the first apparatus may send the indication information indicating the modulation ratio $\alpha$ together with a first signal. In addition, when the first apparatus sends, before sending the first signal, the indication information to indicate the modulation ratio $\alpha$, the indication information may be sent before or after the first apparatus determines the first signal, or the indication information may be sent in a process in which the first apparatus determines the first signal. This is not limited in this application.

For S310, it should be noted that the capability information indicates a sensing interference cancellation capability of the second apparatus. Optionally, the capability information may indicate whether the second apparatus has the sensing interference cancellation capability, or the capability information indicates strength of the sensing interference cancellation capability of the second apparatus.

In S320, the first apparatus may determine the modulation ratio $\alpha$ based on whether the second apparatus has the sensing interference cancellation capability; or the first apparatus may determine the modulation ratio $\alpha$ based on the strength of the sensing interference cancellation capability of the second apparatus. For example, when the second apparatus has the sensing interference cancellation capability, the second apparatus may determine the communication signal in the first signal more accurately. Therefore, the modulation ratio $\alpha$ is small, that is, a power proportion of a communication signal in the first signal is small. When the second apparatus does not have the sensing interference cancellation capability, the second apparatus is prone to be interfered by a sensing signal when determining a communication signal in the first signal. Therefore, the modulation ratio $\alpha$ is large, to enhance the communication signal and reduce interference caused by the sensing signal to the communication signal. Based on a similar reason, a weaker sensing interference cancellation capability of the second apparatus indicates a larger modulation ratio $\alpha$, namely, a larger power proportion of a communication signal in the first signal.

In some embodiments, when the first apparatus determines that the second apparatus does not have the sensing interference cancellation capability, the second apparatus cannot cancel the sensing signal in the first signal, and the second indication information may not be sent to the second apparatus, that is, the modulation ratio $\alpha$ does not need to be indicated to the second apparatus.

In some embodiments, the modulation ratio $\alpha$ may be correlated with at least one of a signal-to-noise ratio, a code rate, a modulation scheme, and a code length of the second apparatus. For example, a lower signal-to-noise ratio measured by the second apparatus may indicate a larger power proportion of the sensing signal, namely, a smaller modulation ratio $\alpha$, and a larger code rate may indicate a larger power proportion of the sensing signal, namely, a smaller modulation ratio $\alpha$. For example, when the signal-to-noise ratio of the second apparatus is 14 dB and an adjustment manner is quadrature phase shift keying (quadrature phase shift keying, QPSK), the second apparatus has a high communication demodulation capability, and may use a high modulation ratio (for example, 0.8), thereby mitigating impact on communication performance. In S320, the first apparatus may determine the modulation ratio $\alpha$ based on at least one of the signal-to-noise ratio, the code rate, the modulation scheme, and the code length of the second apparatus. Optionally, at least one of the signal-to-noise ratio, the code rate, the modulation scheme, and the code length of the second apparatus may be reported by the first apparatus, or may be configured by the first apparatus.

Certainly, the first apparatus may further determine the modulation ratio $\alpha$ with reference to at least one of the signal-to-noise ratio, the code rate, the modulation scheme, and the code length of the second apparatus and the sensing interference cancellation capability of the second apparatus. For example, weighted summation is performed based on values of parameters (such as the signal-to-noise ratio, the code rate, the modulation scheme, the code length, and the sensing interference cancellation capability) of the second apparatus, to determine the modulation ratio $\alpha$.

It should be noted that, in FIG. 8, that the first signal is transmitted between the first apparatus and the second apparatus by using a downlink is merely used as an example, and does not constitute any limitation on this application. For example, the second apparatus may alternatively send capability information to a third apparatus. For another example, a third apparatus may determine a modulation ratio $\alpha$, and a manner in which the third apparatus determines the modulation ratio $\alpha$ is the same as a manner in which the first apparatus determines the modulation ratio $\alpha$. For another example, a third apparatus sends indication information to the first apparatus and the second apparatus to indicate a modulation ratio $\alpha$.

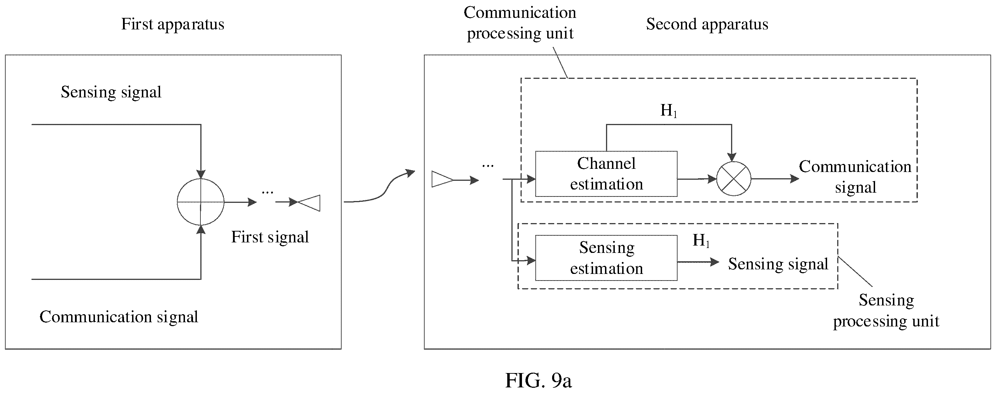

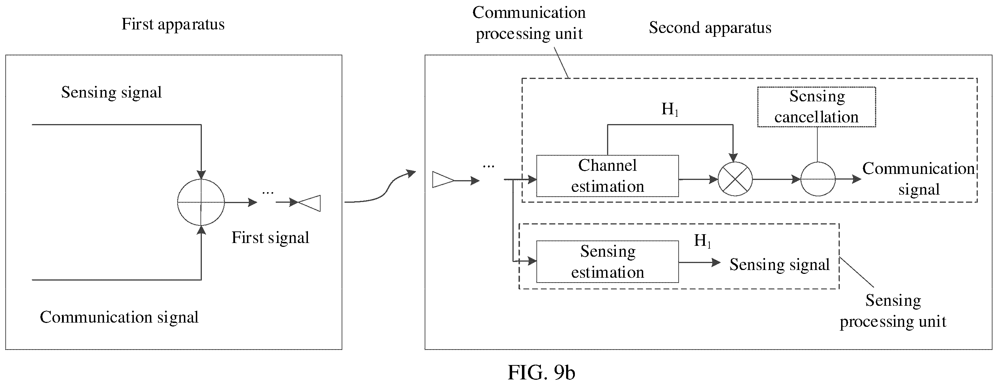

For S230 in FIG. 5, that the second apparatus determines the communication signal and the sensing signal that are in the first signal may include at least two possible implementations shown in FIG. 9a and FIG. 9b.

Refer to FIG. 9a and FIG. 9b. The first apparatus superimposes the communication signal and the sensing signal based on the modulation ratio to obtain the first signal, and sends the first signal to the second apparatus. The second apparatus receives the first signal. In other words, the second apparatus receives the communication signal and the sensing signal by using a same antenna port. Optionally, the second apparatus may sample the first signal by using an analog to digital (analog to digital, A/D) unit, to perform communication (for example, including channel estimation) and sensing (for example, including sensing estimation) based on a sampled first signal.

Refer to FIG. 9a. The second apparatus performs channel estimation on the first signal by using a communication processing unit, and determines the communication signal based on a channel estimation result $H_1$. In addition, the second apparatus performs sensing estimation on the first signal by using a sensing processing unit, and senses a target object based on a sensing estimation result $H_2$.

A difference between the example shown in FIG. 9b and the example shown in FIG. 9a lies in that the second apparatus performs sensing cancellation on the first signal after performing channel estimation on the first signal by using the communication processing unit. It should be understood that because the first signal is a dual-waveform signal, and time-frequency domain features of the first signal are different, after a first signal $s(t)$ enters the sensing processing unit, a communication signal $s_1(t)$ becomes equivalent noise. Therefore, impact of the communication signal $s_1(t)$ on sensing performance may be mitigated through increasing a sensing signal accumulation time. After the first signal $s(t)$ enters the communication processing unit, a sensing signal $s_2(t)$ becomes special sequence noise $s_2$'. To mitigate this impact, the special sequence noise $s_2$' may be obtained through calculation by using sensing sequence parameters obtained through negotiation between the first apparatus and the second apparatus, and the noise is subtracted from a signal obtained after channel estimation, to obtain a relatively pure communication signal.

It should be noted that, in FIG. 9b, the second apparatus needs to perform sensing cancellation on the first signal to cancel noise interference caused by the sensing signal to the communication signal. In this case, the second apparatus may determine the communication signal and the sensing signal in the first signal based on the adjustment ratio $\alpha$, to perform sensing cancellation on the first signal to obtain the communication signal.

Therefore, in this embodiment of this application, the sensing signal and the communication signal occupy a same time-frequency resource. In other words, the dual-waveform signal is obtained by superimposing the communication signal and the sensing signal. In addition, the first apparatus sends the dual-waveform signal to the second apparatus to implement communication and sensing. In this way, the sensing signal does not occupy a communication resource, thereby mitigating impact of the sensing signal on a communication capacity.

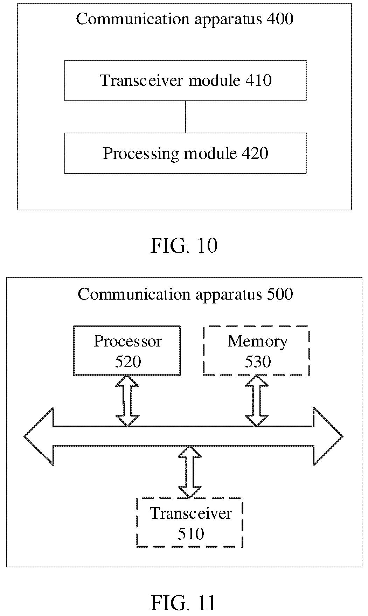

FIG. 10 is a block diagram of a communication apparatus according to an embodiment of this application. As shown in FIG. 10, an apparatus 400 may include a transceiver module 410 and a processing module 420.

Optionally, the communication apparatus 400 may correspond to the first apparatus in the foregoing method embodiments.

It should be understood that the communication apparatus 400 may include modules that perform the method on the first apparatus side in the methods in embodiments of this application. In addition, the modules in the communication apparatus 400 and the foregoing other operations and/or functions are separately used to implement a corresponding procedure of the methods.

When the communication apparatus 400 is configured to perform the method on the first apparatus side, the processing module 420 may be configured to determine a first signal, where the first signal includes a communication signal and a sensing signal, and the communication signal and the sensing signal occupy a same time-frequency resource; and the transceiver module 410 may be configured to send the first signal to a second apparatus.

It should be understood that a specific process in which the modules perform the foregoing corresponding processes is described in detail in the foregoing method embodiments. For brevity, details are not described herein again.

Optionally, the communication apparatus 400 may correspond to the second apparatus in the foregoing method embodiments.

It should be understood that the communication apparatus 400 may include modules that perform the method on the second apparatus side in the methods in embodiments of this application. In addition, the modules in the communication apparatus 400 and the foregoing other operations and/or functions are separately used to implement a corresponding procedure of the methods.

When the communication apparatus 400 is configured to perform the method on the second apparatus side, the transceiver module 410 may be configured to receive a first signal from a first apparatus, where the first signal includes a communication signal and a sensing signal, and the communication signal and the sensing signal occupy a same time-frequency resource; and the processing module 420 may be configured to determine the communication signal and the sensing signal.

It should be understood that a specific process in which the modules perform the foregoing corresponding processes is described in detail in the foregoing method embodiments. For brevity, details are not described herein again.

The transceiver unit 410 in the communication apparatus 400 may be implemented by a transceiver, for example, may correspond to a transceiver 510 in a communication apparatus 500 shown in FIG. 11. The processing unit 420 in the communication apparatus 400 may be implemented by at least one processor, for example, may correspond to a processor 520 in the communication apparatus 500 shown in FIG. 11.

When the communication apparatus 400 is a chip or a chip system disposed in a communication device (for example, a terminal device or a network device), the transceiver unit 410 in the communication apparatus 400 may be implemented by an input/output interface, a circuit, or the like, and the processing unit 420 in the communication apparatus 400 may be implemented by a processor, a microprocessor, an integrated circuit, or the like integrated into the chip or the chip system.

FIG. 11 is another block diagram of a communication apparatus according to an embodiment of this application. As shown in FIG. 11, a communication apparatus 500 may include a transceiver 510, a processor 520, and a memory 530. The transceiver 510, the processor 520, and the memory 530 communicate with each other by using an internal connection path. The memory 530 is configured to store instructions. The processor 520 is configured to execute the instructions stored in the memory 530, to control the transceiver 510 to transmit a signal and/or receive a signal.

It should be understood that the communication apparatus 500 may correspond to the first apparatus or the second apparatus in the foregoing method embodiments, and may be configured to perform steps and/or procedures performed by the first apparatus or the second apparatus in the foregoing method embodiments. Optionally, the memory 530 may include a read-only memory and a random access memory, and provide instructions and data for the processor. A part of the memory may further include a non-volatile random access memory. The memory 530 may be a separate component, or may be integrated in the processor 520. The processor 520 may be configured to execute the instructions stored in the memory 530. When the processor 520 executes the instructions stored in the memory, the processor 520 is configured to perform steps and/or procedures in the method embodiments corresponding to the first apparatus or the second apparatus.

Optionally, the communication apparatus 500 is the first apparatus in the foregoing embodiments.

Optionally, the communication apparatus 500 is the second apparatus in the foregoing embodiments.

The transceiver 510 may include a transmitter and a receiver. The transceiver 510 may further include an antenna, and there may be one or more antennas. The processor 520, the memory 530, and the transceiver 510 may be components integrated in different chips. For example, the processor 520 and the memory 530 may be integrated in a baseband chip, and the transceiver 510 may be integrated in a radio frequency chip. The processor 520, the memory 530, and the transceiver 510 may alternatively be components integrated in a same chip. This is not limited in this application.

The transceiver 520 may alternatively be a communication interface, for example, an input/output interface or a circuit. The transceiver 520, the processor 510, and the memory 530 may all be integrated in a same chip, for example, integrated in a baseband chip.

This application further provides a processing apparatus, including at least one processor. The at least one processor is configured to run a computer program or a logic circuit, so that the processing apparatus performs the method performed by the first apparatus or the second apparatus in the foregoing method embodiments. The processing apparatus may further include a memory, and the memory is configured to store the computer program.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first apparatus or the second apparatus in the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the first apparatus or the second apparatus in the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed and completed by a hardware processor, or may be performed and completed by using a combination of hardware and software modules in a processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another suitable type.

According to the method provided in embodiments of this application, this application further provides a computer program product. The computer program product includes a computer program or a group of instructions. When the computer program or the group of instructions are run on a computer, the computer is enabled to perform the method performed by the first apparatus or the second apparatus in the foregoing method embodiments.

According to the method provided in embodiments of this application, this application further provides a computer-readable storage medium. The computer-readable storage medium stores a program. When the program is run on a computer, the computer is enabled to perform the method performed by the first apparatus or the second apparatus in the foregoing method embodiments.

According to the method provided in embodiments of this application, this application further provides a communication system. The communication system may include the first apparatus and the second apparatus described above.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by various computer-readable media that store various data structures. For example, the components may communicate by using a local and/or remote process and based on, for example, a signal with one or more data packets (for example, data from two components interacting with another component in a local system, a distributed system, and/or across a network such as an internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on this understanding, a part that essentially contributes to the technical solutions of this application or a part of the technical solutions may be embodied in a form of software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a first apparatus, a first signal, wherein the first signal comprises a communication signal and a sensing signal, and the communication signal and the sensing signal occupy a same time-frequency resource; and
   sending, by the first apparatus, the first signal to a second apparatus.

2. The method according to claim 1, wherein a first peak value is greater than a second peak value, the first peak value is a frequency domain peak value obtained after time-domain correlation is performed based on the sensing signal and a delayed signal of the sensing signal, and the second peak value is a frequency domain peak value obtained after time-domain correlation is performed based on the communication signal and a delayed signal of the communication signal.

3. The method according to claim 1 or 2, wherein the sending, by the first apparatus, the first signal to a second apparatus comprises:
   sending, by the first apparatus, the first signal by using N target antenna ports, wherein the N target antenna ports are comprised in an intersection set between W first antenna ports and M second antenna ports, the W first antenna ports are configured to send the sensing signal, the M second antenna ports are configured to send the communication signal, both W and M are greater than or equal to N, and N is greater than or equal to 1.

4. The method according to claim 3, wherein

   an $i^{th}$ target antenna port is an $i^{th}$ second antenna port of N second antenna ports, the N second antenna ports are second antenna ports that are of the M second antenna ports and that fall into the intersection set between the W first antenna ports and the M second antenna ports, and i is less than or equal to N and is greater than or equal to 1; and
   the $i^{th}$ second antenna port and an $i^{th}$ first antenna port or an $(N-i+1)^{th}$ first antenna port of N first antenna ports are a same antenna port, and the N first antenna ports are first antenna ports that are of the W first antenna ports and that fall into the intersection set between the W first antenna ports and the M second antenna ports; or
   the $i^{th}$ second antenna port belongs to a $j^{th}$ second antenna port group, the $j^{th}$ second antenna port group is an antenna port group obtained by dividing the N second antenna ports, the $j^{th}$ second antenna port group is a $j^{th}$ first antenna port or an $(M'-j+1)^{th}$ first antenna port of M' first antenna ports, the M' first antenna ports are first antenna ports that are of the W first antenna ports and that fall into the intersection set between the W first antenna ports and the M second antenna ports, j is less than or equal to M' and is greater than or equal to 1, and M' is less than or equal to N and is greater than or equal to 1.

5. The method according to claim 4, wherein
   in M' second antenna port groups obtained by dividing the N second antenna ports, a $j^{th}$ second antenna port group comprises an $(f(j))^{th}$ second antenna port to an $(f(j+1)-1)^{th}$ second antenna port, and $f(j)$ is equal to:

$$min\left(\left\lceil \frac{N}{M'} \right\rceil * (j-1)+1, N\right) \ \ or \ \ min\left(\left\lfloor \frac{N}{M'} \right\rfloor * (j-1)+1, N\right).$$

6. The method according to any one of claims 1 to 5, wherein both a power proportion of the communication signal in the first signal and a power proportion of the sensing signal in the first signal are correlated with a modulation ratio $\alpha$ on the time-frequency resource.

7. The method according to claim 6, wherein a time-domain waveform s of the first signal satisfies one of the following:

$$s = \sqrt{\alpha}s_1 + \sqrt{1-\alpha}s_2 ;$$

   and

   $s = a_1 s_1 + a_2 s_2$, wherein $\alpha = \dfrac{a_1^2}{a_1^2 + a_2^2}$ , $a_1$ is the power proportion of the communication signal in the first signal, and $a_2$ is the power proportion of the sensing signal in the first signal; and
   $s_1$ is a time-domain waveform of the communication signal, and $s_2$ is a time-domain waveform of the sensing signal.

8. The method according to claim 6 or 7, wherein the method further comprises:

   receiving, by the first apparatus, first indication information sent by a third apparatus, wherein the first indication information indicates the modulation ratio $\alpha$;

sending, by the first apparatus, second indication information to the second apparatus, wherein the second indication information indicates the modulation ratio $\alpha$; or

receiving, by the first apparatus, third indication information sent by the second apparatus, wherein the third indication information indicates the modulation ratio $\alpha$.

9. The method according to claim 8, wherein at least one of the first indication information, the second indication information, or the third indication information comprises a modulation and coding scheme MCS index, and the MCS index corresponds to the modulation ratio $\alpha$.

10. The method according to any one of claims 1 to 9, wherein the method further comprises:
receiving, by the first apparatus, capability information sent by the second apparatus, wherein the capability information indicates a sensing interference cancellation capability of the second apparatus, and the sensing interference cancellation capability is used to determine the modulation ratio $\alpha$.

11. The method according to claim 8 or 9, wherein when the second apparatus has a sensing interference cancellation capability, the first apparatus sends the second indication information to the second apparatus.

12. The method according to any one of claims 6 to 11, wherein the modulation ratio $\alpha$ is correlated with at least one of a signal-to-noise ratio, a code rate, a modulation scheme, and a code length of the second apparatus.

13. The method according to any one of claims 6 to 12, wherein the time-frequency resource comprises L resource elements, a modulation ratio on a $k^{th}$ resource element of the L resource elements is $\alpha_k$, a modulation ratio on an $h^{th}$ resource element of the L resource elements is $\alpha_h$, $\alpha_k$ is different from $\alpha_h$, both k and h are less than or equal to L, and both k and h are greater than or equal to 1.

14. A communication method, comprising:

receiving, by a second apparatus, a first signal from a first apparatus, wherein the first signal comprises a communication signal and a sensing signal, and the communication signal and the sensing signal occupy a same time-frequency resource; and
determining, by the second apparatus, the communication signal and the sensing signal.

15. The method according to claim 14, wherein the determining, by the second apparatus, the communication signal and the sensing signal comprises:
performing, by the second apparatus, sensing cancellation on the first signal based on a modulation ratio $\alpha$ on the time-frequency resource, to obtain the communication signal.

16. The method according to claim 14 or 15, wherein a first peak value is greater than a second peak value, the first peak value is a frequency domain peak value obtained after time-domain correlation is performed based on the sensing signal and a delayed signal of the sensing signal, and the second peak value is a frequency domain peak value obtained after time-domain correlation is performed based on the communication signal and a delayed signal of the communication signal.

17. The method according to any one of claims 14 to 16, wherein both a power proportion of the communication signal in the first signal and a power proportion of the sensing signal in the first signal are correlated with the modulation ratio $\alpha$ on the time-frequency resource.

18. The method according to claim 17, wherein a time-domain waveform s of the first signal satisfies one of the following:

$$s = \sqrt{\alpha}\, s_1 + \sqrt{1-\alpha}\, s_2 \, ;$$

and

$s = a_1 s_1 + a_2 s_2$, wherein $\alpha = \dfrac{a_1^2}{a_1^2 + a_2^2}$ , $a_1$ is the power proportion of the communication signal in the first signal,

and $a_2$ is the power proportion of the sensing signal in the first signal; and

$s_1$ is a time-domain waveform of the communication signal, and $s_2$ is a time-domain waveform of the sensing signal.

19. The method according to claim 17 or 18, wherein the method further comprises:

receiving, by the second apparatus, first indication information sent by a third apparatus, wherein the first indication information indicates the modulation ratio $\alpha$;

receiving, by the second apparatus, second indication information sent by the first apparatus, wherein the second indication information indicates the modulation ratio $\alpha$; or

sending, by the second apparatus, third indication information to the first apparatus, wherein the third indication information indicates the modulation ratio $\alpha$; and

both the second indication information and the third indication information indicate the modulation ratio $\alpha$.

20. The method according to claim 19, wherein at least one of the first indication information, the second indication information, or the third indication information comprises an MCS index, and the MCS index corresponds to the modulation ratio $\alpha$.

21. The method according to any one of claims 14 to 20, wherein the method further comprises:

sending, by the second apparatus, capability information to the first apparatus, wherein the capability information indicates a sensing interference cancellation capability of the second apparatus, and the sensing interference cancellation capability is used to determine the modulation ratio $\alpha$.

22. The method according to claim 19 or 20, wherein when the second apparatus has a sensing interference cancellation capability, the second apparatus receives the second indication information sent by the first apparatus.

23. The method according to any one of claims 15, and 17 to 22, wherein the modulation ratio $\alpha$ is correlated with at least one of a signal-to-noise ratio, a code rate, a modulation scheme, and a code length of the second apparatus.

24. The method according to any one of claims 15, and 17 to 23, wherein the time-frequency resource comprises L resource elements, a modulation ratio on a $k^{th}$ resource element of the L resource elements is $\alpha_k$, a modulation ratio on an $h^{th}$ resource element of the L resource elements is $\alpha_h$, $\alpha_k$ is different from $\alpha_h$, both k and h are less than or equal to L, and both k and h are greater than or equal to 1.

25. A communication apparatus, comprising a module configured to perform the method according to any one of claims 1 to 13, or a module configured to perform the method according to any one of claims 14 to 24.

26. A communication apparatus, comprising a processor, wherein the processor is configured to perform the method according to any one of claims 1 to 24 by running a computer program or by using a logic circuit.

27. The apparatus according to claim 26, further comprising a memory, wherein the memory is configured to store the computer program.

28. The apparatus according to claim 26 or 27, further comprising a communication interface, and the communication interface is configured to input and/or output a signal.

29. A communication system, comprising a first apparatus configured to perform the method according to any one of claims 1 to 13, and a second apparatus configured to perform the method according to any one of claims 14 to 24.

30. A computer-readable storage medium, configured to store computer program instructions, wherein the computer program enables a computer to perform the method according to any one of claims 1 to 24.

31. A computer program product, comprising computer program instructions, wherein the computer program instructions enable a computer to perform the method according to any one of claims 1 to 24.

——————— Transmit signal

– – – – – Reflected signal

FIG. 1

FIG. 2a

021b

Target object

011b

FIG. 2b

022a

Target object

012a

FIG. 3a

022b

Target object

012b

FIG. 3b

Communication system 100

FIG. 4

200

```
┌─────────────────────┐                              ┌─────────────────────┐
│    First apparatus   │                              │  Second apparatus   │
└─────────────────────┘                              └─────────────────────┘
           │                                                     │
┌──────────────────────────────────────────────┐               │
│ S210: Determine a first signal, where the first signal│        │
│ includes a communication signal and a sensing signal,│        │
│  and the communication signal and the sensing signal │        │
│      occupy a same time-frequency resource     │               │
└──────────────────────────────────────────────┘               │
           │        S220: Send the first signal                 │
           │──────────────────────────────────────────────────>│
           │                                                     │
           │           ┌──────────────────────────────────────────────┐
           │           │ S230: Determine the communication signal and the│
           │           │       sensing signal in the first signal       │
           │           └──────────────────────────────────────────────┘
           │                                                     │
```

FIG. 5

Sensing signal

Communication signal

FIG. 6

One resource block

Sensing signal

+

Communication signal

First signal

One resource block

One slot

One slot

FIG. 7

First apparatus

Second apparatus

S310: Send capability information

S320: Determine a modulation ratio

S330: Send indication information to indicate the modulation ratio

S210: Determine a first signal, where the first signal includes a communication signal and a sensing signal, and the communication signal and the sensing signal occupy a same time-frequency resource

S220: Send the first signal

S230: Determine the communication signal and the sensing signal in the first signal

FIG. 8

FIG. 9a

FIG. 9b

FIG. 10

FIG. 11

## INTERNATIONAL SEARCH REPORT

| | |
|---|---|
| International application No. | |
| | **PCT/CN2022/118589** |

| | | |
|---|---|---|
| **A.** | **CLASSIFICATION OF SUBJECT MATTER** | |
| | H04L 27/00(2006.01)i | |

According to International Patent Classification (IPC) or to both national classification and IPC

| **B.** | **FIELDS SEARCHED** |
|---|---|

Minimum documentation searched (classification system followed by classification symbols)

H04L,H04W

Documentation searched other than minimum documentation to the extent that such documents are included in the fields searched

Electronic data base consulted during the international search (name of data base and, where practicable, search terms used)

CNTXT, ENTXT, CNKI, 3GPP: 感知信号, 通信信号, 时域, 频域, 资源, 调制, 占用, 叠加, 混叠, 重叠, 复用, 功率, 双波形, 相同, sensed signal, communication signal, time domain, frequency domain, resource, modulat+, occup+, superposition, alias+, overlap+, multiplex+, power, double waveform, same

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2022100499 A1 (HUAWEI TECHNOLOGIES CO., LTD.) 19 May 2022 (2022-05-19) description, paragraphs 70 and 71 | 1, 14, 25-31 |
| A | CN 113746534 A (SOUTHEAST UNIVERSITY) 03 December 2021 (2021-12-03) entire document | 1-31 |
| A | CN 113784443 A (CHINA ACADEMY OF INFORMATION AND COMMUNICATIONS TECHNOLOGY) 10 December 2021 (2021-12-10) entire document | 1-31 |
| A | CN 114584988 A (HUAWEI TECHNOLOGIES CO., LTD.) 03 June 2022 (2022-06-03) entire document | 1-31 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 June 2023** | **07 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/118589**

| Patent document cited in search report | | | Publication date (day/month/year) | Patent family member(s) | Publication date (day/month/year) |
|---|---|---|---|---|---|
| WO | 2022100499 | A1 | 19 May 2022 | None | |
| CN | 113746534 | A | 03 December 2021 | None | |
| CN | 113784443 | A | 10 December 2021 | None | |
| CN | 114584988 | A | 03 June 2022 | None | |

Form PCT/ISA/210 (patent family annex) (July 2022)